# EUROPEAN PATENT APPLICATION

(11) **EP 4 700 368 A1**
(43) Date of publication of application: **25.02.2026**
(21) Application number: 25787019.6
(22) Date of filing: 21.02.2025
(51) Int. Cl.: G01N 21/55, G01N 21/84, G01N 21/88, H01M 4/04

(54) **APPARATUS FOR MEASURING DEGREE OF DRYING OF ELECTRODE AND ELECTRODE COATING APPARATUS COMPRISING SAME**

(30) Priority: 08.04.2024 KR 20240047177
(71) Applicant: LG Energy Solution, Ltd., Seoul 07335 (KR)
(72) Inventor: LEE, Ji Won, Daejeon 34122 (KR); GU, Dae Geun, Daejeon 34122 (KR)
(74) Representative: Plasseraud IP
(86) International application number: PCT/KR2025/002512
(87) International publication number: WO 2025/216426

(57) **Abstract**

Disclosed herein relates to an electrode drying degree measuring device that may be configured to be positioned further downstream, with respect to the machine direction (MD) of the current collector, compared a top surface drying device configured to dry a slurry coated on a top surface of the current collector, and to respectively measure the drying degree of the center and side portions of the active material layer dried by the top surface drying device. Some embodiments of the present disclosure enable the degree of drying of the active material layer of the top surface coating electrode to be quantified, thereby deriving a correlation between the process variables of the top surface coating device and the top surface drying device and the degree of drying of the active material layer of the top surface coating electrode. Some embodiments of the present disclosure enable rapid response in cases where the drying of the active material layer of the top surface coating electrode is not properly performed, thereby preventing contamination of the rollers located in front of the top drying device relative to the machine direction MD of the current collector and/or the rollers facing the back surface coating device.

## Description

### [Technical Field]

This application claims the benefit of priority to Korean Patent Application No. 10-2024-0047177, filed on April 8, 2024, the disclosure of which is incorporated herein by reference.

The present disclosure relates to an electrode drying degree measuring device and an electrode coating device including the same.

### [Background]

As efforts to reduce dependence on fossil fuels and cut carbon emissions gain momentum, there has been growing interest in secondary batteries that can be reused repeatedly for extended periods through recharging. Among these, lithium secondary batteries, which use lithium ions as ions, are particularly notable for their high energy density and long lifespan, leading to active research and development in this area. As a result, lithium secondary batteries are widely used in various fields, including portable electronic devices, vehicles, and energy storage systems (ESS).

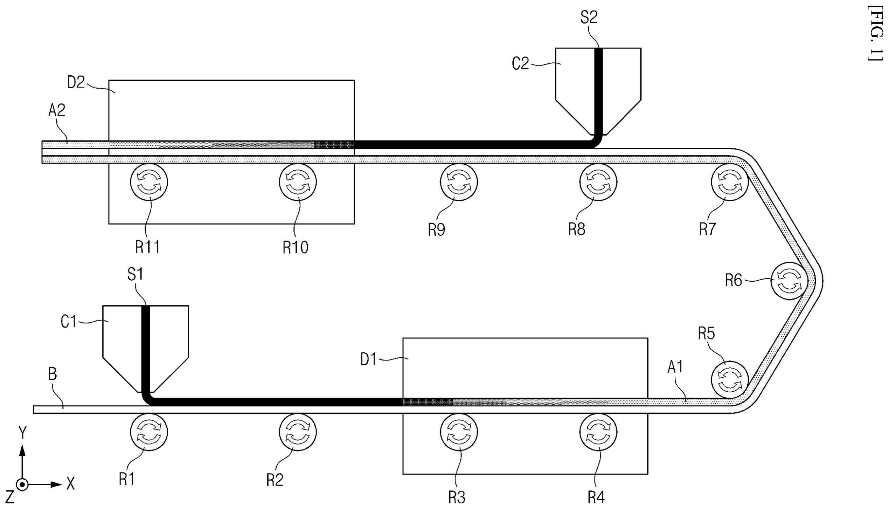

Generally, the electrodes of lithium secondary batteries are double-sided coating electrodes with active material layers located on both sides of the current collector. The manufacturing process of conventional double-sided coating electrodes is described below with reference to FIG. 1. However, the number and arrangement of rollers shown in FIG. 1 are arbitrarily determined for the sake of explanation.

The current collector B is transferred by rollers R1-R11, and the top surface coating device C1 coats the top surface of the current collector B with a first slurry S1 containing an active material, a binder, a conductive material, and a solvent. The top surface drying device D1 dries the first slurry S1 to evaporate the solvent. The top surface coating electrodes thus manufactured are transferred by rollers R1-R11, and the back surface coating device C2 coats the back surface of the current collector B with a second slurry S2 containing active material, binder, conductive material, and solvent. The back surface drying device D2 dries the second slurry S2 to evaporate the solvent. Afterwards, the double-sided coating electrode is manufactured through processes such as rolling, slitting, and vacuum drying.

As described above, in the conventional method, there was no device for measuring the degree of drying of the first active material layer A1 which is located downstream of the top surface drying device D1 with respect to the MD (machine direction) of the current collector B. In the conventional method, only the loading level of the active material in the first active material layer A1 was measured from the color map of the first active material layer A1.

Therefore, it was difficult to derive a correlation between the process variables of the top surface coating device C1 and the top surface drying device D1 and the degree of drying of the first active material layer A1 because the degree of drying of the first active material layer A1 could not be quantified.

Additionally, in the conventional method, when the first active material layer A1 was not properly dried, the rollers R5-R11 located downstream of the top surface drying device D1 with respect to the machine direction (MD) of the current collector B became contaminated. As a result, the quality and production yield of the double-sided coating electrodes deteriorated, leading to reduced cell performance. This issue was particularly pronounced when the roller R8 facing the back surface coating device C2 became contaminated.

### [Summary]

### [Technical Problem]

The technical problem that the present disclosure seeks to solve is to quantify the degree of drying of the active material layer of the top surface coating electrode and derive the correlation between the process variables of the top surface coating device and the top surface drying device and the degree of drying of the active material layer of the top surface coating electrode.

Another objective of the technical concept of the present disclosure is to enable rapid response in cases where the drying of the active material layer of the top surface coating electrode is not properly performed, thereby preventing contamination of rollers located upstream of the back surface coating device with respect to the machine direction MD of the current collector and/or rollers facing the back surface coating device.

### [Technical Solution]

Some embodiments of the present disclosure capable of solving the above problems are as follows.

According to some embodiments, the electrode drying degree measuring device may be located downstream of a top surface drying device configured to dry a slurry coated on the top surface of the current collector with respect to the machine direction (MD) of the current collector, and configured to measure the degree of drying of the center portion and side portions of an active material layer dried by the top surface drying device.

In some embodiments, the electrode drying degree measuring device may be configured to: measure the drying degree of the center portion of the active material layer from the brightness of the center portion of the active material layer, and measure the drying degree of the side portions of the active material layer from the brightness of the side portions of the active material layer.

In some embodiments, the electrode drying degree measuring device may include an image sensor configured to calculate the brightness of the center portion and side portions of the active material layer from an image of the active material layer.

In some embodiments, the electrode drying degree measuring device may include an optical sensor configured to irradiate light onto the active material layer, analyze the light reflected from the active material layer, and calculate the brightness of the center portion and side portions of the active material layer, respectively.

In some embodiments, the electrode drying degree measuring device may include a transmission part configured to transmit a defect signal to a display device when the brightness of the center portion of the active material layer is lower than the threshold value or the brightness of the side portions of the active material layer is higher than the threshold value.

In some embodiments, the electrode drying degree measuring device may include a transmission part configured to transmit a defect signal to a control device when the brightness of the center portion of the active material layer is lower than an under-drying threshold value or when the brightness of the side portions of the active material layer is higher than an over-drying threshold value.

According to some embodiments, the electrode coating device includes: a top surface drying device configured to dry a first slurry coated on the top surface of the current collector; a back surface coating device configured to coat the back surface of the current collector with a second slurry; and the electrode drying degree measuring device positioned between the top surface drying device and the back surface coating device with respect to the machine direction MD of the current collector.

In some embodiments, the electrode coating device may further include: a top surface coating device configured to coat the top surface of the current collector with a first slurry; and a back surface drying device configured to dry a second slurry coated on the back surface of the current collector.

### [Advantageous Effects]

Some embodiments of the present disclosure enable the derivation of a correlation between process variables of a top surface coating device and a top surface drying device and the drying degree of the active material layer of a top surface coating electrode by quantifying the drying degree of the active material layer of the top surface coating electrode.

Some embodiments of the present disclosure enable rapid response in cases where the active material layer of the top surface coating electrode is not properly dried, thereby preventing contamination of rollers located upstream of the top surface drying device with respect to the machine direction MD of the current collector and/or rollers facing the back surface coating device.

The effects that may be obtained from the exemplary embodiments of the present disclosure are not limited to those mentioned above, and other effects not mentioned may be clearly derived and understood by one of ordinary skill in the art to which the exemplary embodiments of the present disclosure belong from the following description. That is, unintended effects of practicing the exemplary embodiments of the present disclosure may also be derived from the exemplary embodiments of the present disclosure by one of ordinary skill in the art.

### [Brief Description of the Drawings]

FIG. 1 is a drawing explaining the manufacturing process of a conventional double-sided coating electrode.
FIG. 2 is a drawing illustrating the position of an electrode drying degree measuring device according to some embodiments and an electrode coating device according to some embodiments.
FIG. 3 is a top view of the top surface coating electrode in the F region of FIG. 2.
FIG. 4 is an enlarged view of the F region in FIG. 2.

### [Best Mode for Carrying out the Disclosure]

The terms and words used in this specification shall not be interpreted as limited to their ordinary or dictionary meanings, but shall be interpreted in accordance with the principle that the inventor may appropriately define the meaning of terms and words to best describe his own disclosure, so as to conform to the technical idea of the present disclosure.

In this specification, terms such as "include" or "have" are intended to specify the presence of the features, numbers, steps, operations, components, parts, or combinations thereof described in the specification, and should not be understood as precluding the presence or possibility of one or more other features, numbers, steps, operations, components, parts, or combinations thereof. Furthermore, when a part such as a layer, film, area, or plate is described as being "on" another part, this includes not only cases where it is directly above the other part but also cases where there is another part in between. Conversely, when a part such as a layer, film, area, or plate is described as being "under" another part, this includes not only cases where it is directly below the other part but also cases where there is another part in between.

The embodiments and drawings are merely examples of the present disclosure and do not represent all of the technical ideas of the present disclosure, so it should be understood that there may be various equivalents and modifications that can replace them.

When describing the present disclosure, detailed explanations of known configurations or functions that are deemed to obscure the essence of the present disclosure are omitted.

The drawings are provided to further explain the present disclosure to those skilled in the art, and therefore, the shapes, sizes, and numbers of components in the drawings may be exaggerated, omitted, or shown schematically for clarity. The shapes, sizes, ratios, and numbers of components in the drawings do not necessarily reflect the actual shapes, sizes, ratios, or numbers of the components.

In this specification, the "top surface of the current collector (B)" refers to one surface of the current collector (B) on which the slurry is first coated during the manufacturing process of a double-sided coating electrode. In this specification, the "back surface of the current collector (B)" refers to the opposite surface of the current collector (B) on which the slurry is first coated during the manufacturing process of a double-sided coating electrode. In this specification, "machine direction (MD) of the current collector (B)" refers to the direction of movement of the current collector as it is transferred by a plurality of rollers (R1 to R11) during the manufacturing process of the double-sided coating electrode.

One aspect of the present disclosure relates to an electrode drying degree measuring device.

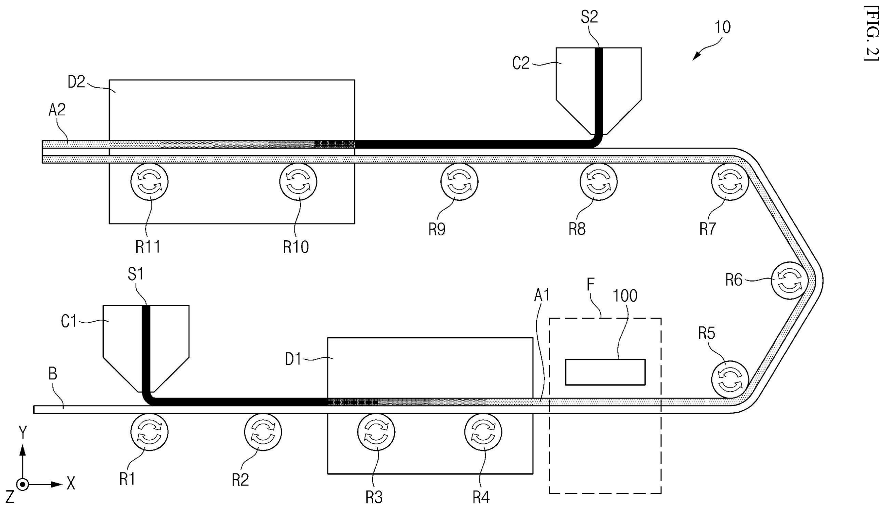

Before describing the electrode drying degree measuring device according to some embodiments, the process of manufacturing a double-sided coating electrode is described with reference to FIG. 2. FIG. 2 is a drawing illustrating the position of the electrode drying degree measuring device according to some embodiments and the electrode coating device according to some embodiments.

A plurality of rollers (R1 to R11) transfers the current collector (B). The arrows inside each of the plurality of rollers (R1 to R11) shown in FIG. 2 indicate the rotation direction of each of the plurality of rollers (R1 to R11).

The top surface coating device C1 coats the top surface of the current collector B with a first slurry S1. As a non-limiting example, the top surface coating device C1 may be a slot die. As a non-limiting example, the first slurry S1 may include an active material, a binder, a conductive material, and a solvent.

The top surface drying device D1 dries the first slurry S1 coated on the top surface of the current collector B to evaporate the solvent in the first slurry S1. As a result, a top surface coating electrode with a first active material layer A1 on the top surface of the current collector B is manufactured. The first active material layer A1 may include an active material, a binder, a conductive material, etc. As a non-limiting example, the top surface drying device D1 may spray air onto the first slurry S1 to evaporate the solvent in the first slurry S1. As a non-limiting example, the top surface drying device D1 may include a plurality of regions where the air temperature, the air spray speed, and the air spray volume are varied.

The back surface coating device C2 coats the back surface of the current collector B with the second slurry S2. As a non-limiting example, the back surface coating device C2 may be a slot die. As a non-limiting example, the second slurry S2 may include an active material, a binder, a conductive material, and a solvent. As a non-limiting example, the first slurry S1 may have the same composition, viscosity, etc., as the second slurry S2. As a non-limiting example, the first slurry S1 may have a different composition, viscosity, etc., from the second slurry S2.

The back surface drying device D2 dries the second slurry S2 coated on the back surface of the current collector B to evaporate the solvent in the second slurry S2. As a result, a double-sided coating electrode with the second active material layer A2 positioned on the back surface of the current collector B is manufactured. The second active material layer A2 may include an active material, a binder, and a conductive material. As a non-limiting example, the second active material layer A2 may have the same composition and thickness as the first active material layer A1. As a non-limiting example, the second active material layer A2 may have a different composition and thickness from the first active material layer A1. As a non-limiting example, the back surface drying device D2 may spray air onto the second slurry S2 to evaporate the solvent in the second slurry S2. As a non-limiting example, the back surface drying device D2 may include a plurality of regions where the air temperature, the air spray speed, and the air spray volume are varied.

The number and arrangement of the plurality of rollers (R1 to R11) shown in FIG. 2; the arrangement of the top surface coating device C1, the top surface drying device D1, the back surface coating device C2, and the back surface drying device D2; and the thicknesses of the current collector B, the first slurry S1, the first active material layer A1, the second slurry S2, and the second active material layer A2 are merely illustrative examples.

As non-limiting examples, the current collector B may include one or more among copper, stainless steel, aluminum, nickel, titanium, sintered carbon; and copper, aluminum, or stainless steel surface-treated with carbon, nickel, titanium, and silver.

As a non-limiting example, the active material may be a positive electrode active material. As a non-limiting example, the positive electrode active material may be a lithium-iron oxide (e.g., LiFePO₄, etc.), a lithium-manganese oxide (e.g., LiMnO₂, LiMn₂O₄, etc.), a lithium-cobalt oxide (e.g., LiCoO₂, etc.), lithium-nickel-based oxide (e.g., LiNiO₂, etc.), lithium-nickel-manganese-based oxide (e.g., LiNi_{1-y1}Mn_{y1}O₂ (where 0<y1<1) and LiMn_{2-z1}Ni_{z1}O₄ (where 0 < z1 < 2) etc.), lithium-nickel-cobalt oxide (e.g., LiNi_{1-y2}Co_{y2}O₂ (where , 0<y2<1) etc.), lithium-manganese-cobalt oxide (e.g., LiCo_{1-y3}Mn_{y3}O₂ (where 0<y3<1) and LiMn_{2-z2}Co_{z2}O₄ (where 0 < z2 < 2), etc.), lithium-nickel-manganese-cobalt oxide compounds (e.g., Li(Niₚ₁Co_{q1}Mnᵣ₁)O₂ (where 0<p1<1, 0<q1<1, 0<r1<1, p1+q1+r1=1), Li(Niₚ₂Co_{q2}Mnᵣ₂)O₄ (where 0<p2<2, 0<q2<2, 0<r2<2, p2+q2+r2=2)etc.), lithium-nickel-cobalt-metal (M) oxide (e.g., Li(Niₚ₃Co_{q3}Mnᵣ₃Mₛ₁)O₂ (where, M is selected from the group consisting of Al, Cu, Fe, V, Cr, Ti, Zr, Zn, Ta, Nb, Mg, B, W, and Mo, p3, q3, r3, and s1 are each independent atomic fractions of elements, such that 0 < p3 < 1, 0 < q3 < 1, 0 < r3 < 1, 0 < s1 < 1, p3+q3+r3+s1=1) and mixtures thereof.

As a non-limiting example, the active material may be a negative electrode active material. As a non-limiting example, the negative electrode active material may be lithium metal; graphite-based carbon materials such as amorphous, plate-like, flake-like, spherical, or fibrous natural graphite or synthetic graphite; amorphous carbon materials such as soft carbon and hard carbon; metals such as Cu, Ni, Na, K, Rb, Cs, Fr, Be, Mg, Ca, Sr, Si, Sb, Pb, In, Zn, Ba, Ra, Ge, Al, and Sn; or alloys of the above metals with lithium; PbO, PbO₂, Pb₂O₃, Pb₃O₄, Sb₂O₃, Sb₂O₄, Sb₂O₅, GeO, GeO₂, Bi₂O₃, Bi₂O₄, Bi₂O₅, LiₓFe₂O₃(0≤x≤1), LiₓWO₂(0≤x≤1), SnₓMe₁₋ₓMe'_{y}O_{z} (Me: Mn, Fe, Pb, Ge; Me': Al, B, P, Si, elements of Groups 1, 2, and 3 of the periodic table, halogens; 0<x≤1; 1≤y≤3; 1≤z≤8); Si, SiOₓ(0<x≤2), Si-Y alloys (where Y is an alkali metal, alkaline earth metal, Group 13 element, Group 14 element, transition metals, rare earth elements, and their combinations, excluding Si), Sn, SnO₂, Sn-Y (where Y is selected from the group consisting of alkali metals, alkaline earth metals, Group 13 elements, Group 14 elements, transition metals, rare earth elements, and their combinations, excluding Sn) and one or more mixtures thereof.

As a non-limiting example, the binder may be polyvinylidene fluoride, polyvinyl alcohol, carboxymethyl cellulose, starch, hydroxypropyl cellulose, regenerated cellulose, polyvinylpyrrolidone, tetrafluoroethylene, polyethylene, polypropylene, ethylene-propylene-diene terpolymer, sulfonated ethylene-propylene-diene terpolymer, styrene-butadiene rubber, styrene-butadiene rubber-carboxymethyl cellulose, fluorinated rubber, and mixtures thereof.

As a non-limiting example, the conductive material may include carbon nanotubes, graphite; carbon black, acetylene black, ketjen black, channel black, furnace black, lamp black, thermal black, and other carbon-based materials; conductive fibers such as carbon fibers or metal fibers; fluorocarbon; metal powders such as aluminum, and nickel powder; conductive oxides such as zinc oxide, titanium carbonate, and other conductive whiskers; conductive metal oxides such as titanium oxide; polyphenylene; and one or more mixtures thereof.

As a non-limiting example, the solvent may include one or more among organic solvents such as N-methyl pyrrolidone, dimethyl formamide, acetone, dimethyl acetamide, and mixtures thereof; and water.

The embodiments of the present disclosure will now be described in detail with reference to the accompanying drawings.

FIG. 2 is a drawing illustrating the position of an electrode drying degree measuring device and an electrode coating device according to some exemplary embodiments.

In some embodiments, the electrode drying degree measuring device 100 may be located downstream of the top surface drying device D1 with respect to the machine direction (MD) of the current collector.

In some embodiments, the electrode drying degree measuring device 100 may be located upstream of the first roller R5, which is located downstream of the top surface drying device D1 with respect to the MD of the current collector.

In some embodiments, the electrode drying degree measuring device 100 may be located upstream of the back surface coating device C2 with respect to the MD of the current collector. In some embodiments, the electrode drying degree measuring device 100 may be located upstream of the roller R8 facing the back surface coating device C2 with respect to the MD of the current collector. In some embodiments, the electrode drying degree measuring device 100 may be located downstream of the first roller R7 located upstream of the back surface coating device C2 with respect to the MD of the current collector.

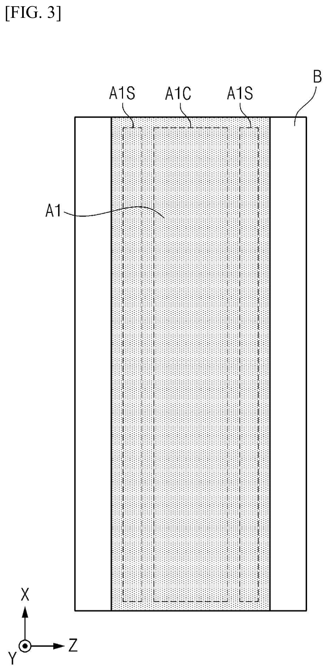

FIG. 3 is a top view of the top surface coating electrode in the F region of FIG. 2. Referring to FIG. 3, the first active material layer A1 includes a center portion A1C and a side portion A1S. Although the number of first active material layers A1 is shown as one in FIG. 3, this is merely an example, and the number of first active material layers may be multiple.

In some embodiments, the electrode drying degree measuring device 100 may be configured to measure the drying degree of the center portion A1C and the side portions A1S of the first active material layer A1 separately. In some embodiments, the electrode drying degree measuring device 100 may be configured to measure the drying degree of the center portion A1C of the first active material layer A1 based on the brightness of the center portion A1C of the first active material layer A1. In some embodiments, the electrode drying degree measuring device 100 may be configured to measure the dryness of the side portions A1S of the first active material layer A1 based on the brightness of the side portions A1S of the first active material layer A1.

As described above, the first active material layer A1 is formed by evaporating the solvent from the first slurry S1. If the solvent is not sufficiently evaporated from the first slurry S1, the solvent remains in the first active material layer A1. In this way, when the solvent is present in the first active material layer A1, the reflectance of the surface of the first active material layer A1 decreases due to the solvent, thereby reducing the brightness of the first active material layer A1. The more solvent present in the first active material layer A1, the lower the brightness of the first active material layer A1, so the drying degree of the first active material layer A1 can be measured from its brightness. In other words, since the drying degree of the first active material layer A1 can be quantified through its brightness, it is possible to derive the correlation between the process variables of the top surface coating device C1 and the top surface drying device D1, which can influence the drying degree of the first active material layer A1, and the drying degree of the first active material layer A1.

As a non-limiting example, the brightness may be the V (Value) in the HSV (Hue, Saturation, Value) color space. As another non-limiting example, the brightness may be the µ value in the RGB (Red, Green, Blue) color space. The µ value is the sum of the R, G, and B channel values divided by 3. As another non-limiting example, the brightness may be the brightness in the Munsell color system.

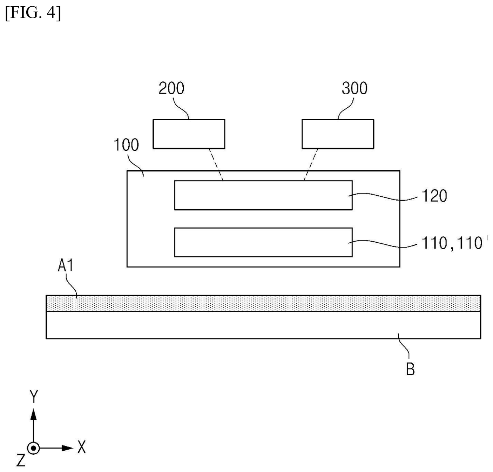

FIG. 4 is an enlarged view of the F region in FIG. 2.

In some embodiments, the electrode drying degree measuring device 100 may include an image sensor 110 configured to calculate the brightness of the center portion A1C and the side portions A1S of the first active material layer A1 from an image captured of the first active material layer A1. In some embodiments, the image sensor 110 may include a camera, lighting, and a data processing part. In some embodiments, the camera may capture an image of the first active material layer A1. In some embodiments, the lighting may illuminate the first active material layer A1. As a non-limiting example, the lighting may be LED lighting. In some embodiments, the data processing part may be configured to calculate the brightness of the center portion A1C and the side portions A1S of the first active material layer A1 from the image of the first active material layer A1 captured by the camera. In some embodiments, the brightness of the center portion A1C of the first active material layer A1 may be the average of the brightness values measured at multiple measurement points selected in the portion corresponding to the center portion A1C of the first active material layer A1 in the image of the first active material layer A1. In some embodiments, the multiple measurement points may be uniformly distributed in the portion corresponding to the center portion A1C of the first active material layer A1 in the image of the first active material layer A1. In some embodiments, the brightness of the side portions A1S of the first active material layer A1 may be the average of the brightness values measured at multiple measurement points selected from the portion corresponding to the side portions A1S of the first active material layer A1 in the image of the first active material layer A1. In some embodiments, the multiple measurement points may be uniformly distributed in the portion corresponding to the side portions A1S of the first active material layer A1 in the image of the first active material layer A1.

In some embodiments, the image sensor 110 may include a plurality of cameras, a plurality of lightings, or a plurality of data processing parts. As a non-limiting example, the image sensor 110 may include three cameras. In this case, one camera may capture the center portion A1C of the first active material layer A1, and the remaining two cameras may capture the side portions A1S of the first active material layer A1. As a non-limiting example, the image sensor 110 may include three lightings. In this case, one lighting illuminates the center portion A1C of the first active material layer A1, and the remaining two lightings illuminate the side portions A1S of the first active material layer A1. As a non-limiting example, the image sensor 110 may include three data processing parts. In this case, one data processing part may be configured to calculate the brightness of the center portion A1C of the first active material layer A1, and the remaining two data processing parts may be configured to calculate the brightness of the side portions A1S of the first active material layer A1.

In some embodiments, the electrode drying degree measuring device 100 may include an optical sensor 110' configured to irradiate light onto the first active material layer A1, analyze the light reflected from the first active material layer A1, and calculate the brightness of the center portion A1C and side portions A1S of the first active material layer A1, respectively. In some embodiments, the brightness of the center portion A1C of the first active material layer A1 may be the average of the brightness measured at multiple measurement points selected at the center portion A1C of the first active material layer A1. In some embodiments, the multiple measurement points may be uniformly distributed in the center portion A1C of the first active material layer A1. In some embodiments, the brightness of the side portions A1S of the first active material layer A1 may be the average of the brightness values measured at multiple measurement points selected from the side portions A1S of the first active material layer A1. In some embodiments, the multiple measurement points may be uniformly distributed in the side portions A1S of the first active material layer A1.

In some embodiments, the optical sensor 110' may include a plurality of spectrophotometers. As a non-limiting example, the optical sensor 110' may include three spectrophotometers. In this case, one spectrophotometer calculates the brightness of the center portion A1C of the first active material layer A1, and the remaining two spectrophotometers calculate the brightness of the side portions A1S of the first active material layer A1.

Generally, the side portions of the active material layer dry faster than the center portion, and excessive drying of the side portions may expose the current collector. In such cases, cracks may form in the electrode. Some embodiments are designed considering such drying characteristics of the active material layer.

If the brightness of the center portion A1C of the first active material layer A1 is lower than the threshold value, this indicates that the drying of the first active material layer A1 is insufficient. If the brightness of the side portions A1S of the first active material layer A1 is higher than the threshold value, this indicates that the drying of the side portions A1S of the first active material layer A1 is excessive. This is because when the current collector B is exposed in the side portions A1S of the first active material layer A1, the reflectance of the side portions A1S of the first active material layer A1 increases due to the current collector B, thereby increasing the brightness of the side portions A1S of the first active material layer A1.

The threshold value can be determined based on the average brightness of active material layers deemed to have an appropriate drying degree. In some embodiments, the threshold value may be set to the same value as the average of the brightness values of the active material layers determined to have an appropriate degree of drying. In some embodiments, the threshold value may be set to approximately 98% to approximately 102% of the average of the brightness values of the active material layers determined to have an appropriate degree of drying, considering process errors.

In some embodiments, the electrode drying degree measuring device 100 may include a transmission part 120 configured to transmit a defect signal to the display device 200 or the control device 300 when the brightness of the center portion A1C of the first active material layer A1 is lower than the first threshold value or the brightness of the side portions A1S of the first active material layer A1 is higher than the second threshold value. In some embodiments, the first threshold value may be set to approximately 98% of the average brightness value of active material layers determined to have an appropriate drying degree, considering process errors. In some embodiments, the second threshold value may be set to approximately 102% of the average brightness value of active material layers determined to have an appropriate drying degree, considering process errors.

When the transmission part 120 transmits a defect signal to the display device 200, the display device 200 may display an alarm such as a sound or light to enable the operator to recognize that the drying of the first active material layer A1 is defective.

When the transmission part 120 transmits a defect signal to the control device 300, the control device 300 can stop the operation of the rollers R1 to R11, the top surface coating device C1, the top surface drying device D1, the back surface coating device C2, and the back surface drying device D2.

Another aspect of the present disclosure relates to an electrode coating device.

FIG. 2 is a drawing illustrating the position of an electrode drying degree measuring device according to some embodiments and an electrode coating device according to some embodiments.

In some embodiments, the electrode coating device 10 may include the aforementioned electrode drying degree measuring device 100 positioned between the top surface drying device D1 and the back surface coating device C2 based on the MD (machine direction) of the top surface drying device D1, the back surface coating device C2, and the current collector B.

In some embodiments, the electrode coating device 10 may additionally include a top surface coating device C1 and a back surface drying device D2.

In some embodiments, the electrode coating device 10 may additionally include a plurality of rollers (R1 to R11).

In some embodiments, the top surface coating device C1, the top surface drying device D1, the electrode drying degree measuring device 100, the back surface coating device C2, and the back surface drying device D2 may be sequentially disposed based on the machine direction MD of the current collector B.

The descriptions of the top surface coating device C1, top surface drying device D1, electrode drying degree measuring device 100, back surface coating device C2, and back surface drying device D2 are the same as those described above, so duplicate descriptions are omitted.

The above description is merely illustrative of the present disclosure. The scope of the present disclosure should be interpreted according to the claims, and all technical ideas within the scope of the claims, including those equivalent or equivalent to the claims, should be interpreted as falling within the scope of the present disclosure.

### [Description of Reference Numerals]

10: ELECTRODE COATING DEVICE
A1: FIRST ACTIVE MATERIAL LAYER
A2: SECOND ACTIVE MATERIAL LAYER
B: CURRENT COLLECTOR
C1: TOP SURFACE COATING DEVICE
C2: BACK SURFACE COATING DEVICE
D1: TOP SURFACE DRYING DEVICE
D2: BACK SURFACE DRYING DEVICE
R1 TO R11: PLURALITY OF ROLLERS
S1: FIRST SLURRY
S2: SECOND SLURRY
100: ELECTRODE DRYING DEGREE MEASURING DEVICE
110: IMAGE SENSOR
110': OPTICAL SENSOR
120: TRANSMISSION PART
200: DISPLAY DEVICE
300: CONTROL DEVICE
A1C: CENTER PORTION
A1S: SIDE PORTIONS

## Claims

1. An electrode drying degree measuring device located downstream of a top surface drying device configured to dry a slurry coated on the top surface of a current collector with respect to a machine direction (MD) of the current collector, and
configured to measure a degree of drying of a center portion and side portions of an active material layer dried by the top surface drying device.

2. The electrode drying degree measuring device of claim 1, wherein
the electrode drying degree measuring device is configured to:
measure the drying degree of the center portion of the active material layer from the brightness of the center portion of the active material layer, and
measure the drying degree of the side portions of the active material layer from the brightness of the side portions of the active material layer.

3. The electrode drying degree measuring device of claim 2, wherein
the electrode drying degree measuring device comprises an image sensor configured to calculate the brightness of the center portion and side portions of the active material layer from an image of the active material layer.

4. The electrode drying degree measuring device of claim 2, wherein
the electrode drying degree measuring device comprises an optical sensor configured to irradiate light onto the active material layer, analyze the light reflected from the active material layer, and calculate the brightness of the center portion and side portions of the active material layer, respectively.

5. The electrode drying degree measuring device of claim 2, wherein
the electrode drying degree measuring device comprises a transmission part configured to transmit a defect signal to a display device when the brightness of the center portion of the active material layer is lower than a threshold value or the brightness of the side portions of the active material layer is higher than the threshold value.

6. The electrode drying degree measuring device of claim 2, wherein
the electrode drying degree measuring device comprises a transmission part configured to transmit a defect signal to a control device when the brightness of the center portion of the active material layer is lower than an under-drying threshold value or when the brightness of the side portions of the active material layer is higher than an over-drying threshold value.

7. An electrode coating device comprising:
a top surface drying device configured to dry a first slurry coated on the top surface of the current collector;
a back surface coating device configured to coat the back surface of the current collector with a second slurry; and
an electrode drying degree measuring device according to claim 1 positioned between the top surface drying device and the back surface coating device.

8. The electrode coating device of claim 7, further comprising:
a top surface coating device configured to coat the top surface of the current collector with a first slurry; and a back surface drying device configured to dry a second slurry coated on the back surface of the current collector.
